# EUROPEAN PATENT APPLICATION

(11) **EP 2 154 415 A2**
(43) Date of publication of application: **17.02.2010**
(21) Application number: 09000338.5
(22) Date of filing: 13.01.2009
(51) Int. Cl.: F16M 11/08

(54) **Flat screen assembly with a stand device**

(30) Priority: 12.08.2008 CN 200820132739 U
(71) Applicant: Shenzhen TCL New Technology Ltd., Nanshan District Shenzhen Guangdong 518067 (CN)
(72) Inventor: Huerre, Dominique, 92360 Meudon la Forêt (FR); Bertho, Dominique, 49320 Vauchretien (FR); Perrier, Jacques, 49100 Angers (FR)
(74) Representative: Frese-Göddeke, Beate

(57) **Abstract**

A flat screen assembly of the invention comprises a flat screen panel (P) and a stand device, where the stand device has a base means, a fixing means, a first support means and a second support means. The first support means comprises a support element, an outer washer (5) and an inner washer (6). In an assembled position, the fixing means is fixed to the base means, and the first support means is pivot-mounted to the fixing means, and the second support means is fixed to the first support means and to the flat screen panel (P). According to the invention a rotating partition (3) of the support element is pivot-mounted between the outer and inner washers (5, 6), which are fixed to the fixing means.

## Description

### BACKGROUND OF THE INVENTION

### FIELD OF THE INVENTION

The present invention is related to a flat screen assembly, which comprises a flat screen panel and a stand device with a base means, a fixing means, a first support means and a second support means. In an assembled position, the fixing means is fixed to the base means, the first support means is pivot-mounted to the fixing means and the second support means is fixed to the first support means and to the flat screen panel. Flat screen assemblies with stand devices are used for computers and TV apparatuses.

### DESCRIPTION OF THE PRIOR ART

A stand device for a flat screen assembly is known from the JP 2006-227390. A first support means of the stand device comprises a support element and a first washer, where the support element is set on a fixing means and the first washer is arranged between the fixing means and the support element. The first support means also comprises a fixing assembly with a second washer, a spring plate, a third washer and a screw. In an assembled position, the fixing assembly is arranged beneath a front face of the fixing means while the screw is fixed to the support element.

As a result, the screw together with the support element is pivot-mounted to the fixing element. By rotating the flat screen, the pivot-mounted screw could be loosened.

The pivot-mounted elements of the first support means are located near the base means. The location of the rotation function near the base means limits the possible design of the stand device. The access to the screw beneath the fixing elements could be difficult.

A stand device for a flat screen assembly, mentioned as a base device of a LCD TV-set, is known from the CN 2927554. A first support means of the stand device comprises a support element and a first washer, where the support element is arranged upon a fixing means and where the first washer is arranged between the fixing means and the support element. The first support means also comprises a fixing assembly with a second washer, a third washer, a nut and a screw. In an assembled position, the fixing assembly, all except for the screw, is arranged above an inside face of the support element. The screw protrudes through the fixing element, the first washer, the support element, the second and the third washer and is fixed to the support element by the nut.

As a result, also this screw together with the support element is pivot-mounted to the fixing means. The pivot-mounted parts of the first support means are located near the base means.

### SUMMARY OF THE INVENTION

It is therefore desirable to improve a flat screen assembly with a stand device in order to simplify the mounting of the assembly, in particular to simplify the mounting of the stand device. In addition, it is desirable to improve the stand device with respect to a safety connection between the parts of the stand device.

According to the invention this can be achieved by the features of claim 1. Possible advantageous developments of the invention are specified in the dependent claims.

A flat screen assembly of the invention comprises a flat screen panel and a stand device with a base means, a fixing means, a first support means and a second support means. The first support means comprises a support element, an outer washer and an inner washer. In an assembled position, the fixing means is fixed to the base means, the first support means is pivot-mounted to the fixing means, and the second support means is fixed to the first support means and to the flat screen panel.

According to the invention, a rotating partition of the support element is pivot-mounted between the outer and inner washers, which are fixed to the fixing means.

The support element alone, i.e. its rotating partition between the washers, is moved when the flat screen panel is pivoted. All other elements of the first support means are fixed to the fixing means. In particular, the outer and the inner washer are fixed to the fixing means e.g. by a screw, which extends from the outer washer through openings of the outer washer, of the rotating partition of the support element and of the inner washer up to the fixing means. A pivot-mounted screw, which can be loosened during rotation and which had to be secured by a spring, is not necessary.

The stand device is improved with respect to the safety of the connection between its parts. The first support means needs only few elements. The mounting of the assembly is simplified.

The support means with the support element, which is pivoted-mounted between the fixed outer and inner washers, makes it possible to arrange the elements of the support means outside of the fixing means.

In an embodiment of the invention the first support means, in the assembled position is arranged on a face side of the fixing means. By arranging the first support means on a face side of the fixing means, the support means are arranged opposite to the base means. It is possible to locate the pivot-mounted rotating partition of the support element near the flat screen panel and to integrate at least elements of the first support means into a housing of the flat screen panel. This arrangement enables new possible designs of the stand device.

In an embodiment of the invention the first support means comprises a cover. In the assembled position, the cover is arranged on the outer washer, where the cover and the inner and outer washers are commonly fixed to the fixing means. The cover is fixed to the fixing means by at least one screw, which extends through corresponding openings of the washers and the rotating partition. Only four pieces, namely the support element, the two washers and the cover, and at least one screw are used for pivot-mounting the support element to the fixing means.

Preferably, the cover is provided with a cylindrical collar. In the assembled position, the collar protrudes through a corresponding second opening of the outer washer and a corresponding first opening of the rotating partition of the support element. The collar avoids a compression of the outer washer when the cover is fixed to the fixing means. An outer face of the collar is generated as a slide face for the rotating partition.

Preferably, the collar is provided with an intermittence within a sector of the collar circle, while the rotating partition comprises a projection extending into the second opening. In the assembled position, the projection is arranged in the sector of the intermittence.

In an embodiment of the invention the support element comprises a support partition. In the assembled position, the second support means are fixed at the support partition.

In an embodiment of the invention, the second support means comprises a support bar. In the assembled position, the support bar is fixed to the flat screen panel.

Preferably, the support partition comprises two parallel plates. In the assembled position, the support bar is fixed between the two plates.

In an embodiment of the invention, the fixing means comprises a cylinder. In the assembled position, the cylinder is connected to the base means and to the first support means at its opposite face sides.

Preferably, the base means comprises a plate, which is provided with a cylindrical groove for the cylinder of the fixing means.

### BRIEF DESCRIPTION OF THE DRAWINGS

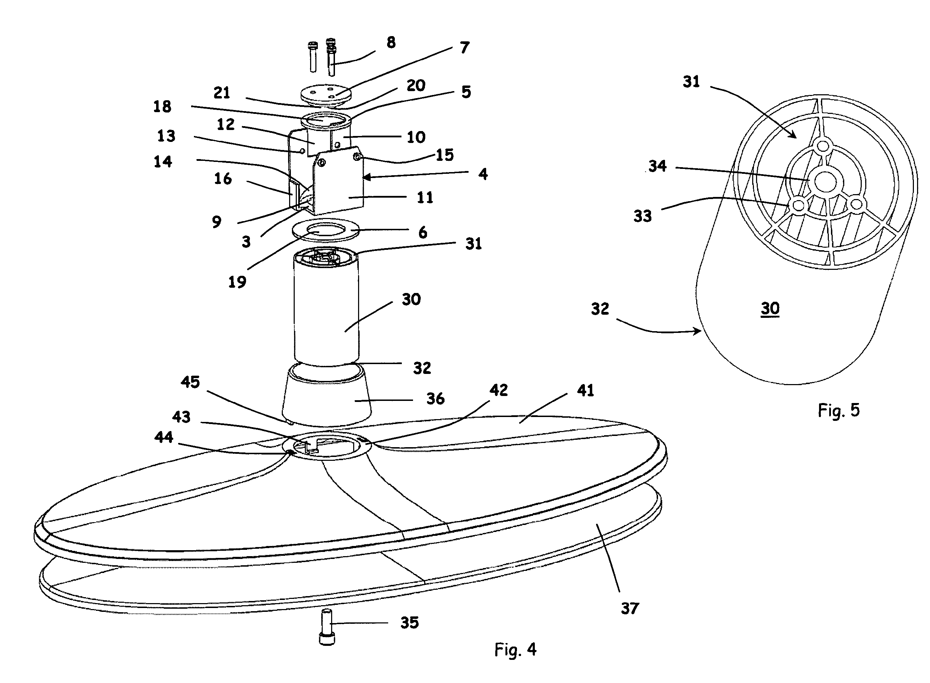

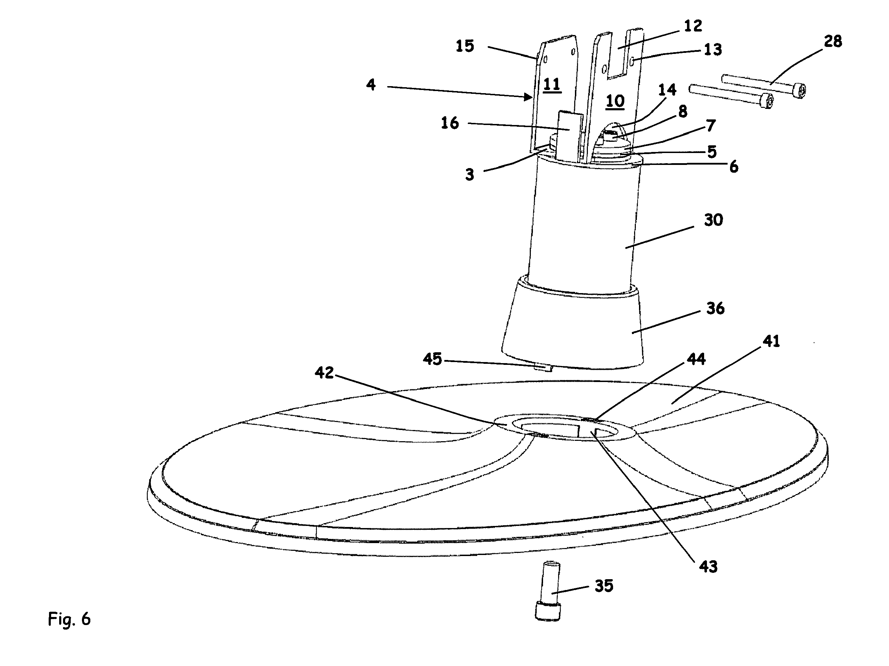

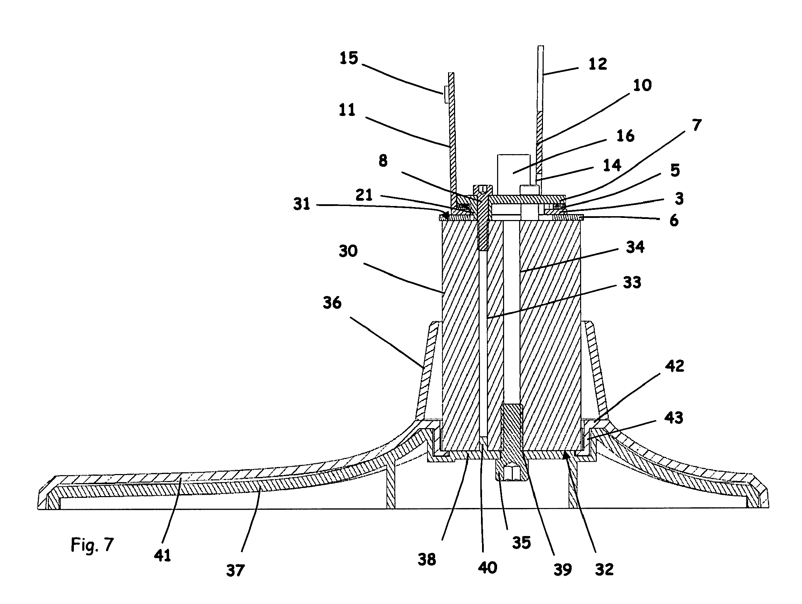

The invention will be explained in more detail using one embodiment, which is illustrated in figures 1 to 12.
It shows:
- Figure 1,: a simplified perspective exploded view of a first support means of a stand device of a flat screen assembly according to the invention;
- Figure 2,: a simplified perspective view of a support element of the first support means;
- Figure 3,: a simplified perspective exploded view of a second support means of the stand device;
- Figure 4,: a simplified perspective exploded view of the first support means, a fixing means and a base means of the stand device;
- Figure 5,: a simplified perspective view of a cylinder of the fixing means;
- Figure 6,: a simplified perspective view of the first and second support means and the fixing means, which are assembled together, and of the base means of the stand device;
- Figure 7,: a simplified cross section of the stand device with the first support means, the fixing means and the base means;
- Figure 8,: a simplified cross section of the flat screen assembly with the stand device;
- Figure 9,: a simplified rear view of a packing device of the flat screen assembly;
- Figure 10,: a simplified perspective view of a packing device of an assembly of the fist support means and the fixing means;
- Figure 11,: a simplified side view of the packing device of the flat screen assembly where the bottom plate is arranged parallel to the flat screen area; and
- Figure 12,: a simplified side view of a packing device of an assembled flat screen assembly for comparison.

### DETAILED DESCRIPTION OF THE INVENTION

A flat screen assembly of an embodiment of the invention comprises a flat screen panel P, which is generated e.g. by a LCD panel, and a stand device. As shown in figures, the flat screen panel P has a panel body, which basically has the shape of a cuboid. The flat screen panel P is provided with a housing with at least a rear cover 1 and a front cover 2. The stand device comprises a base means, a fixing means, a first support means and a second support means.

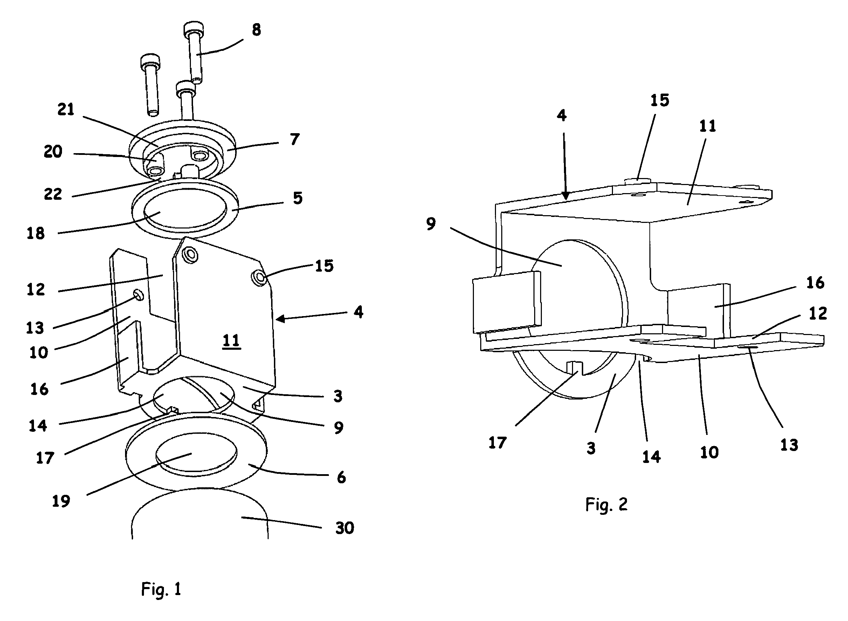

The first support means which is shown in figure 1 has a support element with a rotating partition 3 and a support partition 4, an outer washer 5, an inner washer 6, a cover 7 and at least one first screw 8, in this embodiment three first screws 8.

The support element in another perspective is shown in figure 2. The rotating partition 3 of the support element is generated as a base plate with a circular first opening 9.

The support partition 4 is generated as at least one plate, which is arranged perpendicularly to the rotating partition 3. In this embodiment, the support partition 4 is generated as two plates 10, 11 which are arranged vis-à-vis at opposite sides of the rotating partition 3. The cross section of the support element has the shape essentially of a U, where the base of the U is formed by the rotating partition 3 and the sides of the U are formed by the plates 10, 11 of the support partition 4. In particular, the plate 10 is somewhat shifted toward the middle of the first opening 9, in order to fit with the second support means, the flat screen panel P and the housing of this exemplary embodiment.

The plate 10 has a greater height than the plate 11. The plate 10 is provided with an outer recess 12 in the middle of its outer edge and with two holes 13 beside the outer recess 12 and with an inner recess 14 in the middle of its inner edge. The plate 10 is adjoined to the base plate of the rotating partition 3 at the sides of the recess 14. The outer recess 12 has the shape of a rectangle and the inner recess 14 has the shape of a segment of a circle. The straight edge of the segment is placed adjacent to the rotating partition 3 while its borrow edge is directed to the outer recess 12 of the plate 10. The shape of the recess 14 corresponds to the outer shape of the part of the rotating partition 3, which protrudes the plate 10. In the assembled position, the outer washer 5 and the cover 7, which are arranged onto the rotating partition 3, extend through the recess 14 and protrude the plate 10. The plate 11 is provided with two holes with nuts 15 on the outer face of the plate 11. The holes with the nuts 15 are aligned with the holes 13.

The support partition 4 has two lugs 16, which are arranged vis-à-vis at opposite sides from edges of the base plate of the rotating partition 3 between the plates 10, 11. The lugs 16 extend perpendicular to the base plate and to the plates 10 in the direction of the plates 10, 11.

The lugs 16 are used to install the first support means to the second support means. In particular, the lugs 16 are used as stoppers at the panel elements 23 which vertically place and stop the first support means in relation to the second support means.

The base plate of the rotating partition 3 has the shape of a ring where its inner diameter is formed by the first opening 9 and where its outer diameter is provided with outer projections with straight edges in the regions of the plate 11 and of the lugs 16. The edge of the base plate is round beneath and protruding the second recess 14 of the plate 10.

The base plate of the rotating partition 3 has an inner projection 17, which extends from the inner diameter into the first opening 9. The projection 17 is arranged at the side of the plate 10 beneath the inner recess 14.

In an embodiment of the invention the support element is manufactured from one flat metal sheet, where the shape of the rotating partition 13 with the projection 17, the plate 10 with the outer recess 12, the plate 11 and the two lugs 16 is cut out. The recess 14 of the plate 10 and the outer shape of the part of the rotating partition 3 protruding the plate 10 is generated by a cut between the rotating partition 3 and the plate 10. After cutting out the shape of the support element, the plates 10, 11 and the lugs 16 are bended in a way that they extend in one direction perpendicularly to the rotating partition 3.

The outer and inner washers 5, 6 are ring-shaped and have a second circular opening 18 and a third circular opening 19. The outer diameter of the inner washer 6 is greater than the diameter of the outer washer 5. The inner diameter of the inner washer 6 is the same as the inner diameter of the outer washer 5.

The cover 7 is generated as a cover plate, which is provided with three bosses 20 for the first screws 8 and a circular collar 21, which extend outwards from an inner face side of the cover plate. The bosses 20 are equidistantly arranged at an inner diameter inside the collar 21. The height of the bosses 20 is slightly greater than the height of the collar 21.

The collar 21 has an intermittence 22 within a sector of the collar circle.

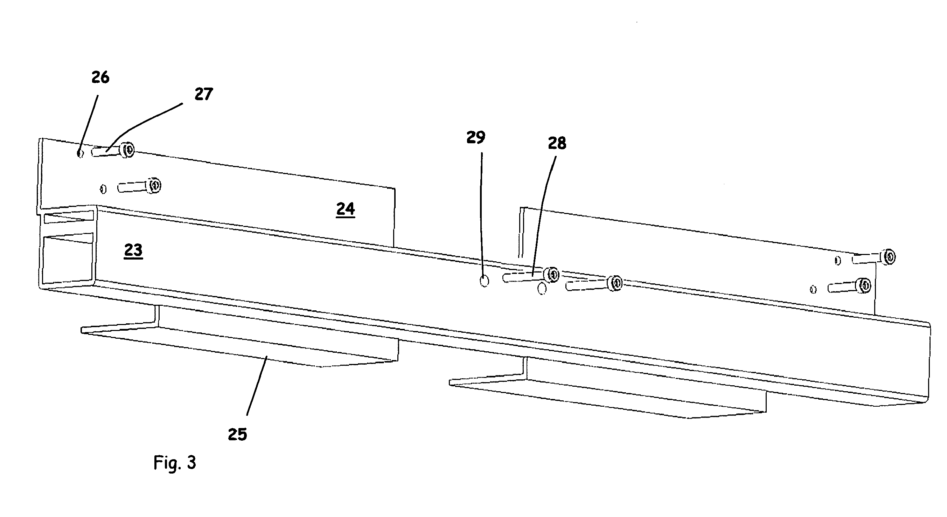

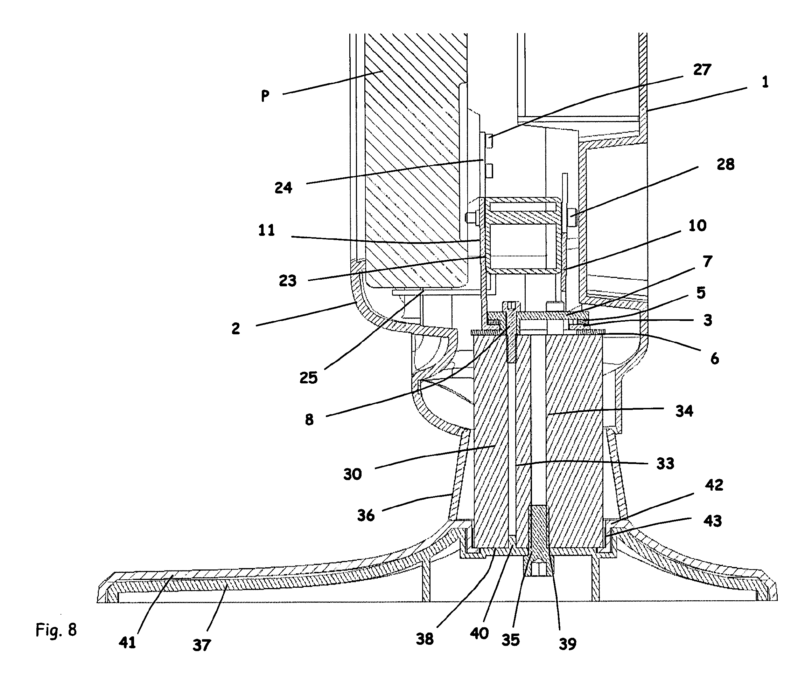

The second support means, which is shown in figures 3 and 8 has a support bar 23, two fixing elements 24 and two panel elements 25. The support bar 23 is generated as a profile with a rectangular cross cut. The fixing elements 24 are plates, which are connected to an edge of the support bar 23 with a certain distance to another and which, in an assembled position, are directed to the flat screen panel P. Each fixing element 24 is provided with two holes 26 for two panel screws 27 for fixing the second support means to the flat screen panel P.

The panel elements 25 are plates, which are bended in an angle of 90°. In an assembled position, a first part of each panel element 25 extends from an opposite edge of the support bar 23 parallel to the flat screen area. A second part of each panel element 25 extends perpendicular to the flat screen area and the flat screen panel P.

The support bar 23 is provided with two second screws 28 and holes 29 for the second screws 28 in its centre. The diameter of the holes 29 is slightly greater than the diameter of the screws 28 in order to let it crossing the support bar 23 easily when fixing the first support means.

The fixing means comprises a cylinder 30 with two face sides 31, 32 and with three first threads 33 extending from the first face side 31 into its interior for the first screws 8 of the first support means and with at least one, namely one, second thread 34 extending from the centre of the second face side 32 into its interior for a third screw 35. The threads 33, 34 are formed by tapped bosses, which extend from the first face side 31 to the second face side 32.

The fixing means comprises a first over cover 36 for aesthetical reasons, which has the shape of a hollow cylinder and envelops the cylinder 30 in its lower part.

The base means comprises a bottom plate 37, which has the shape of an ellipse and which has an elevation with a circular cavity 38 with an outer groove at one of the two centres of the ellipse. The diameter of the cavity 38 corresponds to the outer diameter of the cylinder 30 of the fixing means. The bottom plate 37 has a hole 39 in the centre of the cavity 38 and a pin 40. In an assembled position, the pin 40 extends in a corresponding hole of one of the first threads 33 of the cylinder 30 in order to avoid any rotation between the cylinder 30 and the bottom plate 37.

The base means comprises a second over cover 41, also for aesthetical reasons. The shape of the second over cover 41 corresponds to the shape of the bottom plate 37, but instead of the cavity 38 it comprises a central hole with a flange 42 and with at least one arresting lug 43, namely four arresting lugs 43. The flange 42 comprises two arresting holes 44, which are provided for at least one arresting pin 45 protruding from the first over cover 36 downwards.

In an assembled position, the fixing means is fixed to the base means, the first support means, namely the rotating partition 3, is pivot-mounted between the outer washer 5 and the inner washer 6 to the fixing means and the second support means is fixed to the first support means and to the flat screen panel P. The outer washer 5 and the inner washer 6 are fixed to the fixing means.

The fixing means is connected to the base means and to the first support means at the opposite face sides 31, 32 of the cylinder 30, where the first support means with all its pieces is arranged on the first face side 31 of the cylinder 30.

The cover 7 of the first support means is arranged on the outer washer 5 and fixed to the fixing means. In particular, the bosses 20 extend through the openings 9, 18, 19 of the outer washer 5, the rotating partition 3 and the inner washer 6 up to the first face side 31 of the cylinder 30. The three first screws 8 extend from the top of the cover 7 through the bosses 20 and are fixed in the first threads 33 of the cylinder 30.

The collar 21 of the cover 7 extends through the openings 9 and 18 of the outer washer 5 and the rotating partition 3, while its outer face is generated as a slide face for the rotating partition 3.

The projection 17 of the rotating partition 3 of the support element is arranged in the sector of the intermittence 22 of the collar 21 of the cover 7. The sector of the intermittence 22 determines the movement of the flat screen panel P.

The second support means are fixed at the support partition 4 of the support element of the first support means. The holes 29 of the support bar 23 are aligned correspondingly to the holes 13 and the holes with the nuts 15 of the support element or the first support means, due to the lugs 16 of the support element. The support bar 23 is fixed between the two plates 10, 11 by the second screws 28. The support bar 23 is fixed by the panel screws 27 to the flat screen panel P at its fixing elements 24, while the flat screen panel P is arranged on the panel element 25.

The arresting lugs 43 of the second over cover 41 are located in the outer groove of the cavity 38 of the bottom plate 37 beneath the cylinder 30. The cylinder 30 is arranged in the cavity 38 of the bottom plate 37, while it is surrounded by the first over cover 36 at its lower part.

The support element with both the rotating partition 3 and the support partition 4, which is manufactured from one metal sheet, has a thickness of 1,5 to 3 mm.

The support bar 23, the fixing elements 24 and the panel elements 25 of the second support means are manufactured from a metal, e.g. from aluminium. In particular, the support bar 23, the fixing 24 and the panel elements 25 are generated as an extruded aluminium profile which is machined by milling and drilling.

The cover 7 and the bottom plate 37 are manufactured form an aluminium die cast. The washers 5, 6 are manufactured from nylon. The cylinder 30 is manufactured from extruded aluminium. The first and second over cover 36, 41 are manufactured from plastic, e.g. from ADS glossy.

The rear cover 1 and the front cover 2 are manufactured from a Polystyrene High Impact.

The screen size of this embodiment ranges e.g. from 11" to 60".

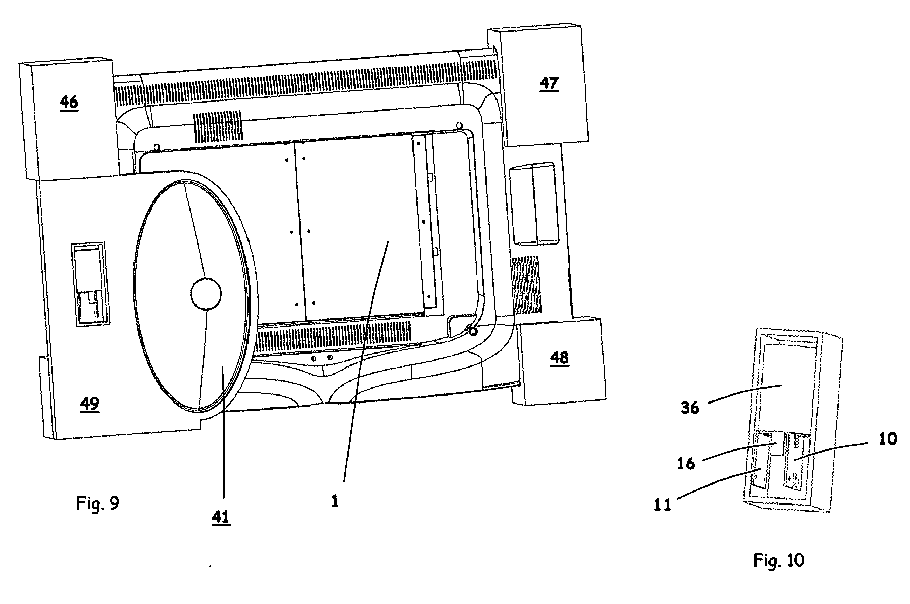

A packing device for the flat screen assembly is shown in figures 10 to 11. It comprises three edge parts 46, 47, 48 and a stand part 49 with an edge part at the four edges of the housing. The stand part 49 houses the base means and an assembly of the first support means and the fixing means. The bottom plate 37 of the base means are arranged parallel to the area of the flat screen panel P. The assembly of fixing means and first support means is preassembled and arranged with the stand part 49 beside the base means.

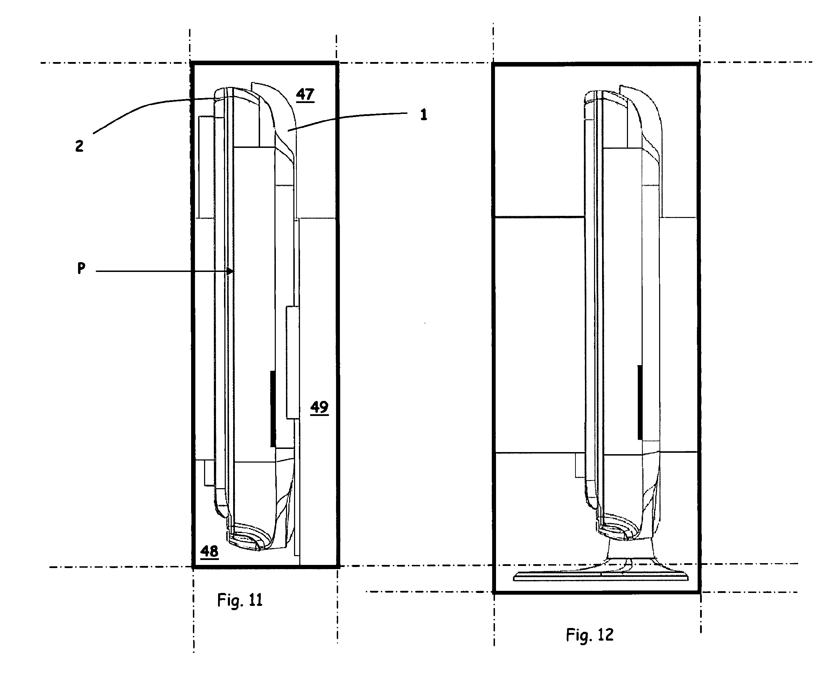

This packing device with a flat screen assembly according to the invention which allows the base means to be arranged parallel to the flat screen panel P only needs a small space in comparison to a packing device for a flat screen assembly with fixed base means shown in figure 12.

The stand device according to the invention only needs a small number of elements of the first support means. The space for the stand device is reduced. As a result, the stand device reduces the dimension of the means providing the rotation function. New design solutions are possible. The volume of packing of the flat screen assembly is reduced. Efficiency and strength of the stand function are improved.

The support means according to the invention also makes it possible to preassemble the first support means and the fixing means. The consumer only has to fix the assembly to the base means and then to the second support means. In order to fix the assembly with the base means to the second support means the customer has to move the assembly along the support bar 23, align progressively the holes 13 and nuts 15 on the holes 29 and to fix the screws 28.

As an alternative, the flat screen assembly has a flat screen panel P corresponding to the plasma technology.

## Claims

1. A flat screen assembly comprising a flat screen panel (P) and a stand device, where the stand device comprises a base means, a fixing means, a first support means and a second support means,
where the first support means comprises a support element, an outer washer (5) and an inner washer (6),
where, in an assembled position,
the fixing means is fixed to the base means, the first support means is pivot-mounted to the fixing means, and the second support means is fixed to the first support means and to the flat screen panel (P), and
a rotating partition (3) of the support element is pivot-mounted between the outer and inner washers (5, 6), which are fixed to the fixing means.

2. A flat screen assembly according to claim 1, **characterized in that**, in the assembled position, the first support means is arranged on a face side of the fixing means.

3. A flat screen assembly according to claim 1 or 2, **characterized in that** the first support means comprises a cover (7) where, in the assembled position, the cover (7) is arranged on the outer washer (5), where the cover (7) and the inner and outer washers (5, 6) are commonly fixed to the fixing means by at least one first screw (8).

4. A flat screen assembly according to claim 3, **characterized in that** the cover is provided with a cylindrical collar (21) which, in the assembled position, protrudes through a corresponding second opening (18) of the outer washer (5) and a corresponding first opening (9) of the rotating partition (3) of the support element while an outer face of the collar (21) is generated as a slide face for the rotating partition (3).

5. A flat screen assembly according to claim 4, **characterized in that** the collar (21) is provided with an intermittence (22) within a sector of the collar circle and the rotating partition (3) comprises a projection (17) extending into the second opening (18) where, in the assembled position, the projection (17) is arranged in the sector of the intermittence (22).

6. A flat screen assembly according to one of the claims 1 to 5, **characterized in that** the support element comprises a support partition (4) at which, in the assembled position, the second support means are fixed.

7. A flat screen assembly according to one of the claims 1 to 6, **characterized in that** the second support means comprises a support bar (23) which, in the assembled position, is fixed to the flat screen panel (P).

8. A flat screen assembly according to claim 7, **characterized in that** the support partition (4) comprises two parallel plates (10, 11) where, in the assembled position, the support bar (23) is fixed between the two plates (10, 11).

9. A flat screen assembly according to one of the claims 1 to 8, **characterized in that** the fixing means comprises a cylinder (30) which, in the assembled position, is connected to the base means and to the first support means at its opposite face sides (31, 32).

10. A flat screen assembly according to one of the claims 1 to 9, **characterized in that** the base means comprises a plate, which is provided with a cylindrical groove (38) for the cylinder (30) of the fixing means.
